# EUROPEAN PATENT APPLICATION

(11) **EP 3 972 141 A1**
(43) Date of publication of application: **23.03.2022**
(21) Application number: 20197526.5
(22) Date of filing: 22.09.2020
(51) Int. Cl.: H04B 1/7156

(54) **COMMUNICATION NETWORK AND METHOD OF TIME SYNCHRONOUS VOICE AND DATA TRANSMISSION**

(71) Applicant: Rohde & Schwarz GmbH & Co. KG, 81671 München (DE)
(72) Inventor: Dierks, Stefan, 81671 München (DE); Kerger, Stefan, 81671 München (DE); Rosanka, Christopher, 81671 München (DE); Volianskii, Mikhail, 81671 München (DE)
(74) Representative: Prinz & Partner mbB

(57) **Abstract**

The invention provides a communication network (10) for time synchronous voice and data transmission. The communication network (10) comprises at least two transceivers (12, 14) that are configured to transmit data packets in a transmission mode and to receive data packets in a receiving mode. The at least two transceivers (12, 14) are further configured to generate an alternating radio frequency signal that follows a pseudo-random sequence which is known to each of the transceivers (12, 14). At least one of the transceivers (12, 14), in its receiving mode, is configured to record a pseudo-random sequence transmitted, thereby obtaining a recorded pseudo-random sequence. The respective transceiver (12, 14) is configured to correlate the recorded pseudo-random sequence with the pseudo-random sequence known, thereby determining a position of the pseudo-random sequence transmitted within the pseudo-random sequence known. Further, a method of synchronizing a communication network (10) for time synchronous voice and data transmission is described.

## Description

The invention relates to a communication network for time synchronous voice and data transmission. Furthermore, the invention relates to a method of time synchronous voice and data transmission.

In the state of the art, communication networks for time synchronous voice and data transmission are known, for instance so-called mobile ad-hoc networks (MANETs). These communication networks usually comprise several transceivers that communicate with each other in a wireless manner by means of radio frequency (RF) signals. In terms of network communication, the transceivers relate to nodes of the communication network.

Typically, the transceivers are integrated within mobile end devices such that the mobile end devices change their respective locations during operation, resulting in different relative positions and distances between the transceivers while communicating with each other. In other words, the connections established between the transceivers change over time.

Moreover, for certain applications like police radio or military radio, it is important that the transmitted signals are difficult to detect for anyone else than the designated recipient and that it is also difficult to jam the transmission, for example by using an interfering transmitter. Different techniques for a secure transmission via radio frequency are known in the state of the art, for instance direct frequency hopping, orthogonal frequency division multiplexing and shaped orthogonal frequency division multiplexing. Generally, spread-spectrum techniques may be used that relate to methods by which a signal generated with a particular bandwidth is spread in the frequency domain, resulting in a signal with a wider bandwidth. Frequency-hopping spread spectrum (FHSS), direct-sequence spread spectrum (DSSS), time-hopping spread spectrum (THSS), chirp spread spectrum (CSS), and combinations of these techniques are forms of spread spectrum, wherein FHSS and DSSS employ pseudorandom number sequences, created by using pseudorandom number generators, to determine and control the spreading pattern of the radio frequency signal across the allocated bandwidth.

In addition, the transceivers of the communication network have to be synchronized with each other in time in order to ensure a secure and stable communication. Usually, the transceivers are synchronized to a common clock, namely a reference clock. For instance, synchronization is required to assure that all transceivers hop at the same time in the frequency hopping spread spectrum (FHSS).

In the state of the art, a dedicated synchronizing resource is typically used to synchronize the transceivers in time. For instance, the respective transceivers are assigned to a master/slave system wherein one of the transceivers corresponds to a master transceiver having a superior function compared to the other transceivers, namely the slave transceivers. The master transceiver is used for synchronizing the transceivers of the communication system with respect to each other. The master transceiver may relate to the fastest transceiver that is used for synchronizing another (slower) transceiver by exchanging dedicated timing information through a periodic beacon transmission, particularly a time stamp. Accordingly, this approach requires transmitting and processing timestamps among the transceivers for synchronizing the transceivers with each other in a temporal manner.

Accordingly, there is a need for a simpler way to synchronize the transceiver of a communication network.

The invention provides a communication network for time synchronous voice and data transmission. The communication network comprises at least two transceivers that are configured to transmit data packets in a transmission mode and to receive data packets in a receiving mode. The at least two transceivers are further configured to generate an alternating radio frequency signal that follows a pseudo-random sequence which is known to each of the transceivers. At least one of the transceivers, in its receiving mode, is configured to record a pseudo-random sequence transmitted, thereby obtaining a recorded pseudo-random sequence. The respective transceiver is configured to correlate the recorded pseudo-random sequence with the pseudo-random sequence known, thereby determining a position of the pseudo-random sequence transmitted within the pseudo-random sequence known.

Furthermore, the invention provides a method of synchronizing a communication network for time synchronous voice and data transmission, with the following steps:
- Providing a communication network for time synchronous voice and data transmission, wherein the communication network comprises at least two transceivers that transmit data packets in a transmission mode and receive data packets in a receiving mode, wherein the at least two transceivers generate an alternating radio frequency signal that follows a pseudo-random sequence which is known to each of the transceivers,
- Recording a pseudo-random sequence transmitted by at least one of the transceivers in its receiving mode, thereby obtaining a recorded pseudo-random sequence, and
- Correlating the recorded pseudo-random sequence with the pseudo-random sequence known by the respective transceiver, thereby determining a position of the pseudo-random sequence transmitted within the pseudo-random sequence known.

The invention is based on the finding that the transceivers themselves are enabled to identify the position of the pseudo-random sequence transmitted with respect to the pseudo-random sequence known such that a time relation can be derived from this information. Accordingly, no external absolute temporal reference is needed for synchronizing the transceivers with each other since the transceivers are enabled to synchronize themselves with each other by taking the radio frequency signals received into account, which follow the respective pseudo-random sequence. Since the receiving transceiver receives a radio frequency signal that follows the pseudo-random sequence known at least partly (depending on the duration recorded), the respective transceiver, namely the receiving one, is enabled to determine the position of the pseudo-random sequence transmitted with respect to the pseudo-random sequence known, thereby gathering a temporal reference from the radio frequency signal received.

Since no external absolute temporal reference is needed, more available resources for communication are ensured.

For instance, the alternating radio frequency signal that follows the pseudo-random sequence corresponds to a frequency hopping waveform.

Hence, a part of the pseudo-random sequence may be included in every message sent. Since the alternating radio frequency signal may correspond to the frequency hopping waveform, the respective transceiver in its receiving mode may not receive all messages sent.

Therefore, the pseudo-random sequence may be fragmented. This means that the pseudo-random sequence may have gaps of information due to messages not received.

Accordingly, a first transceiver, namely the transmitting transceiver, transmits the radio frequency signal that follows the pseudo-random sequence, wherein the second transceiver, namely the receiving transceiver, receives the radio frequency signal that follows the pseudo-random sequence, thereby recording a pseudo-random sequence transmitted. In fact, the radio frequency signal received by the second or rather receiving transceiver may have a duration or rather length that does not encompass the entire pseudo-random sequence known, but only a portion thereof which corresponds to the pseudo-random sequence recorded.

Generally, the pseudo-random sequence recorded may be shorter than the pseudo-random sequence known or rather shifted in time with respect to the pseudo-random sequence known.

In any case, the second or rather receiving transceiver processes the recorded pseudo-random sequence by correlating the recorded pseudo-random sequence with the pseudo-random sequence known by the respective transceiver. Then, the second or rather receiving transceiver determines a (relative) position of the pseudo-random sequence transmitted within the pseudo-random sequence known. Accordingly, a temporal relationship can be determined by correlating the pseudo-random sequence transmitted with the pseudo-random sequence known, which is used to temporally synchronize the transceivers.

Accordingly, the transceivers may synchronize themselves (automatically) based on the pseudo-random sequence.

In other words, a clock synchronization of the transceivers (in the communication network) is performed based on the pseudo-random sequence. Once the clock synchronization of the transceivers based on the pseudo-random sequence has been performed, the transceivers are enabled to communicate with each other by using Frequency-hopping spread spectrum (FHSS) or rather direct-sequence spread spectrum (DSSS).

In terms of the invention, the correlation of the pseudo-random sequence transmitted with the pseudo-random sequence known means that both are taken in relation with respect to each other. In fact, the pseudo-random sequence transmitted and the pseudo-random sequence known are compared with each other such that the temporal relationship can be determined appropriately.

Accordingly, the respective correlation relates to a comparison, thereby determining the temporal relationship. Therefore, the terms "correlate" and "compare" can be used in an interchangeable manner.

An aspect provides that the pseudo-random sequence transmitted corresponds to a part of the pseudo-random sequence known. The pseudo-random sequence transmitted may have a length that is shorter than the length of the pseudo-random sequence known. In fact, the receiving transceiver is configured to correlate the pseudo-random sequences after a pre-defined time period has past or rather a pre-defined length of the pseudo-random sequence has been recorded.

Another aspect provides that the pseudo-random sequence changes over time. The pseudo-random sequence may be associated with a frequency hopping such that the frequency of the radio frequency signal changes over time in a pseudo-random manner, resulting in the pseudo-random sequence changing over time. The transmitting transceiver in the communication network generates the radio frequency signal following the pseudo-random sequence such that the receiving transceiver, for instance an entering transceiver, is enabled to predict completely or partly the future of the pseudo-random sequence by observing the already recorded pseudo-random sequence for a long enough time. Hence, the frequencies to be used in the future can be predicted by the receiving transceiver, as the pseudo-random sequence is identified or rather recognized.

According to a further aspect, the transceivers are configured to synchronize themselves in a passive manner. The transceivers of the communication network are enabled to synchronize themselves with each other just by listening to each other, namely receiving and processing the respective radio frequency signals exchanged.

Particularly, the communication network is a self-synchronizing communication network. Since the transceivers are enabled to synchronize themselves with each other in the passive manner, the communication network is enabled to automatically synchronize its participants, namely the transceivers, thereby resulting in the self-synchronizing communication network.

A further aspect provides that the determination of the position of the pseudo-random sequence transmitted within the pseudo-random sequence known corresponds to an estimation of the position. As mentioned above, the receiving transceiver, namely the transceiver in its receiving mode, is enabled to predict completely or partly the future of the pseudo-random sequence by observing the already recorded pseudo-random sequence. The respective transceiver recording the pseudo-random sequence transmitted is enabled to gather information from the radio frequency signal received, namely the pseudo-random sequence, in order to estimate the (relative) position of the pseudo-random sequence transmitted with respect to the pseudo-random sequence known. Hence, the temporal relationship of the transmission can be derived from the correlation performed such that the transceivers can be synchronized with respect to each other.

In fact, only a part of the pseudo-random sequence transmitted is observed or rather a part of the already recorded pseudo-random sequence is taken into account for predicting the future of the pseudo-random sequence at least partly, particularly completely.

For instance, only bursts with a frequency within a certain bandwidth are taken into consideration or rather recorded.

The communication network may comprise an artificial intelligence module that is configured to decode pseudo-random sequences. The artificial intelligence module may be used to decode complex pseudo-random sequences or rather a complex scenario encompassing several different pseudo-random sequences received simultaneously, which may be transmitted from several different transmitting transceivers, namely transceivers in their transmission mode.

The term "artificial intelligence module" is understood to denote a hardware-and/or software module employing artificial intelligence techniques. Generally, the artificial intelligence module may use pattern recognition technologies in order to identify the position of the pseudo-random sequence transmitted within the pseudo-random sequence known.

Thus, the artificial intelligence module may use classical algorithms and/or machine learning techniques in order to determine the position of the pseudo-random sequence recorded within the pseudo-random sequence known, particularly pattern recognition techniques, image analysis techniques and/or reinforcement learning techniques. Accordingly, the artificial intelligence module may relate to a set of if-then rules, particularly at least one computer-implemented algorithm, which process the pseudo-random sequence recorded in order to precisely estimate or rather determine the position of the pseudo-random sequence recorded with respect to the pseudo-random sequence known.

Alternatively or additionally, the artificial intelligence module may comprise at least one (artificial) neural network. Of course, the artificial intelligence module may comprise several (i.e. at least two) artificial neural networks, which may be interconnected with each other.

For instance, the artificial intelligence module comprises a trained machine learning model, a neural network or deep-learning techniques. The machine learning technology relates to a subset of artificial intelligence according to which machines take data and learn on their own. Usually, machine learning technologies are based on large data bases. Machine learning allows a system to learn to recognize patterns on its own and to make predictions.

The neural network or rather deep-learning techniques use several layers that are interconnected with each other, wherein each layer may comprise several nodes that are connected with the nodes of the other layers.

Deep-learning techniques relate to machine learning techniques while using neural networks. Put differently, deep learning is part of a broader family of machine learning methods based on artificial neural networks with representation learning.

Generally, the respective learning may be supervised, semi-supervised or unsupervised.

Accordingly, the artificial intelligence module identifies whether the spectrum recorded encompasses at least a portion of the radio frequency signal following the pseudo-random sequence known.

Another aspect provides that the pseudo-random sequence known is received by at least one of the transceivers via an external key. The external key may be a cryptographic key. Generally, a cryptographic key corresponds to data that is used to lock or unlock a cryptographic function, for instance an authentication, an authorization and/or an encryption. By using the external key, particularly the cryptographic key, the transceivers are informed concerning the pseudo-random sequence known in a secure manner that is used for correlating the pseudo-random sequence received.

For instance, the communication network is a burst communication network. The burst communication network uses radio frequency bursts for communication purposes. Generally, this relates to broadcasting a relatively high-bandwidth transmission over a short period.

Particularly, the communication network is a mobile ad-hoc network (MANET). The network is ad-hoc because the network does not rely on a pre-existing infrastructure, such as routers in wired networks or access points in managed (infrastructure) wireless networks.

Another aspect provides that the pseudo-random sequence is associated with frequency, length, power, modulation and/or coding. For instance, the pseudo-random sequence relates to a burst parameter sequence, namely burst frequencies, burst lengths, power, modulation and/or coding. In fact, the (burst) frequencies, the (burst) lengths, the power, the modulation and/or the coding of the radio frequency signal(s) may vary in time in the pseudo-random manner.

For instance, the at least two transceivers are configured to generate an alternating carrier frequency of the radio frequency signal, wherein the carrier frequency follows the pseudo-random sequence. The carrier frequency corresponds to the frequency used by the radio frequency signals, namely the signal bursts. The carrier frequency may follow a pre-defined set of frequencies (hopset), which nevertheless appears to be randomly distributed.

In fact, the alternating carrier frequency may relate to Frequency-hopping spread spectrum (FHSS) that is a method of transmitting radio frequency signals by rapidly changing the carrier frequency among many distinct frequencies occupying a large spectral band. The changes are controlled by a code known to both transceivers, namely the transmitting transceiver and the receiving transceiver, wherein the code relates to the pseudo-random sequence. Thus, the rapidly changing carrier frequency appears to randomly change, thereby following the pseudo-random sequence.

In general, any kind of offset can be compensated accordingly, namely an internal offset associated with the transmitting transceiver, an offset associated with the distance between the transmitting transceiver and the receiving transceiver as well as an internal offset associated with the receiving transceiver.

Generally, the aspects mentioned above apply for the method of synchronizing a communication network for time synchronous voice and data transmission and the communication network itself in a similar manner.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows an overview of a communication network for time synchronous voice and data transmission according to the invention,
- Figure 2 shows a diagram illustrating the pseudo-random sequence transmitted and the pseudo-random sequence known in a simple environment, and
- Figure 3 shows a diagram illustrating the pseudo-random sequence transmitted and the pseudo-random sequence known in a complex environment.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

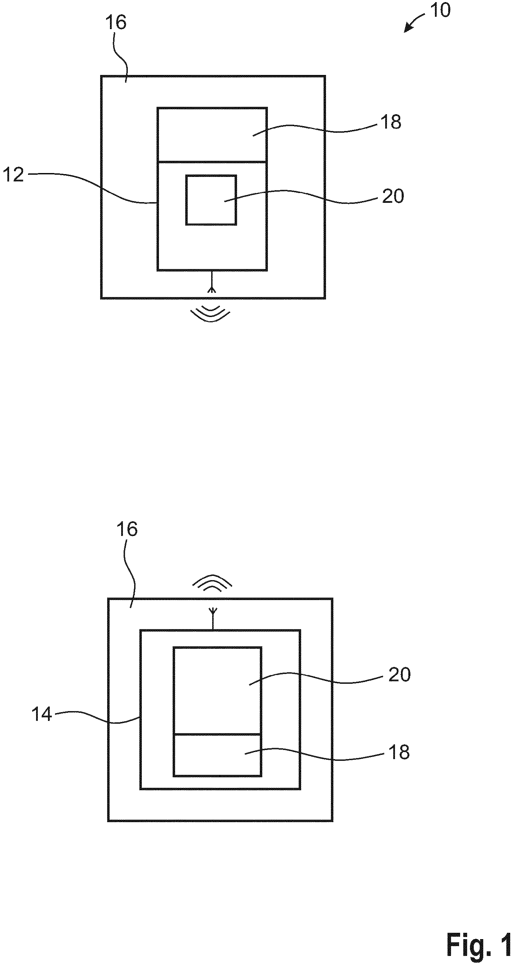

Figure 1 shows a communication network 10 for time synchronous voice and data transmission.

The communication network 10 comprises two transceivers 12, 14 that are enabled to communicate with each other via radio frequency (RF) signals.

The radio frequency (RF) signals may correspond to signal bursts, wherein a relatively high-bandwidth transmission is broadcasted over a short period in time. Particularly, a single radio frequency signal consists of several signal bursts that differ from each other in at least one characteristic, for instance frequency, length, power, modulation and/or coding. Accordingly, the communication network 10 corresponds to a burst communication network.

In the shown embodiment, the transceivers 12, 14 are integrated within mobile radios 16 such that the transceivers 12, 14 are mobile, resulting in varying connections established between the transceivers 12, 14. Therefore, the communication network 10 also corresponds to a so-called mobile ad-hoc network (MANET).

The transceivers 12, 14 each comprise a transmission mode in which the transceivers 12, 14 are configured to transmit data packets as well as a receiving mode in which the transceivers 12, 14 are configured to receive data packets. Accordingly, the transceivers 12, 14 can communicate with each other, wherein the first transceiver 12 relates to a transmitting transceiver that transmits a radio frequency signal that is received by the second transceiver 14, namely the receiving transceiver.

Generally, the transceivers 12, 14 generate an alternating radio frequency signal that follows a pseudo-random sequence that is known to each of the transceivers 12, 14. The pseudo-random sequence ensures that the radio frequency signal, for instance several radio frequency bursts, is transmitted in a manner that appears to correspond to noise since the radio frequency bursts do not follow a pattern that can be identified without knowledge of the pseudo-random sequence. Accordingly, it is difficult to detect the radio frequency signal for anyone else than the designated recipient, namely the receiving transceiver 14, and, consequently, it is also difficult to jam the transmission, for example by using an interfering transmitter.

For instance, the pseudo-random sequence changes over time which means that the temporal characteristics of the radio frequency signal changes in a pseudo-random manner.

In general, frequency, length, power, modulation and/or coding of the radio frequency signal may be changed over time in the pseudo-random manner. In other words, the pseudo-random sequence is associated with frequency, length, power, modulation and/or coding, particularly the burst frequencies, the burst lengths, the power of the bursts, the respective modulation of the bursts and/or the coding used.

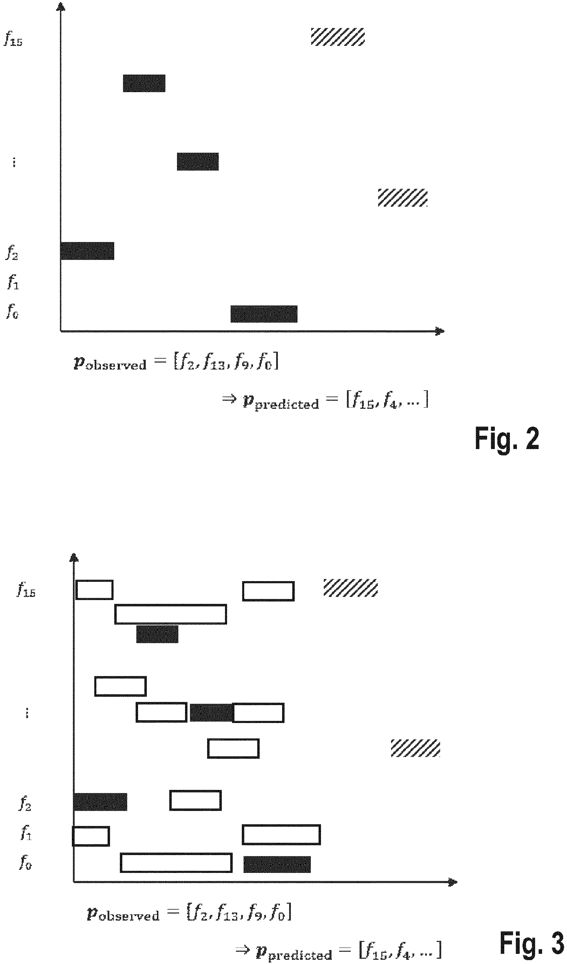

In the specific embodiments shown in Figures 2 and 3 that are discussed later in more detail, the pseudo-random sequence is associated with an alternating carrier frequency of the radio frequency signal, particularly the signal bursts. In other words, the transceivers 12, 14 generate the alternating carrier frequency of the radio frequency signal, wherein the carrier frequency follows the pseudo-random sequence.

The pseudo-random sequence known may be handled to the transceivers 12, 14 via an external key, for instance a cryptographic key. Thus, it is ensured that the pseudo-random sequence is submitted in a secure manner.

In the shown embodiment, the transceiver 14 comprises a storage medium 18 that is used to store the external key. Further, the transceiver 12 is connected with a respective storage medium 18 wherein the transceivers 12 is enabled to access the external key stored.

Generally, both transceivers 12, 14 may comprise the storage medium 18 in an integrated manner or alternatively they are connected with the externally located storage medium 18.

This generally ensures that the transceivers 12, 14 are enabled in their respective transmission mode to transmit the radio frequency signal that follows the pseudo-random sequence.

Therefore, the transmitting transceiver 12 transmits the alternating radio frequency signal, particularly the different signal bursts, following the pseudo-random sequence.

The receiving transceiver 14 receives the alternating radio frequency signal, particularly the different signal bursts, thereby recording a pseudo-random sequence transmitted. The pseudo-random sequence transmitted relates to a part of the entire pseudo-random sequence known that is provided for both transceivers 12, 14.

While recording the pseudo-random sequence transmitted, the receiving transceiver 14 generates a recorded pseudo-random sequence. The recorded pseudo-random sequence however corresponds to the pseudo-random sequence transmitted.

In fact, the respective nomenclature only emphasizes that the pseudo-random sequence transmitted relates to the transmitting transceiver 12, whereas the pseudo-random sequence received relates to the receiving transceiver 14.

The receiving transceiver 14 further correlate the recorded pseudo-random sequence with the pseudo-random sequence known in order to determine a position of the pseudo-random sequence transmitted within the pseudo-random sequence known.

As mentioned above, the pseudo-random sequence transmitted or rather the pseudo-random sequence received relates to a part of the pseudo-random sequence known. Since the receiving transceiver 14 is aware of the order of the pseudo-random sequence known, the receiving transceiver 14 is enabled to determine the (relative) position of the pseudo-random sequence transmitted/received within the pseudo-random sequence known.

Accordingly, the receiving transceiver 14 can synchronize itself with respect to the transmitting transceiver 12 by simply listening or rather recording the radio frequency signal transmitted that follows the pseudo-random sequence.

Accordingly, the transceivers 12, 14 are enabled to synchronize themselves in a passive manner, as the receiving transceiver 14 is enabled to identify the relative orientation of the pseudo-random sequence transmitted/received within the pseudo-random sequence known.

This procedure can be repeated by many transceivers of the communication network 10, resulting in a self-synchronizing communication network 10.

Generally, the determination of the (relative) position of the pseudo-random sequence transmitted within the pseudo-random sequence known corresponds to an estimation of the position within the pseudo-random sequence known, which depends on the complexity of the pseudo-random sequence.

However, the receiving transceiver 14 that receives and processes the radio frequency signal from the transmitting transceiver 12 is generally enabled to predict completely or partly the future of the pseudo-random sequence by observing the already recorded pseudo-random sequence for a long enough time.

This is shown in Figure 2 in a simple environment in which only the transmitting transceiver 12 transmits the radio frequency signal consisting of the signal bursts that vary concerning their carrier frequency and their burst lengths.

The receiving transceiver 14 records the pseudo-random sequence transmitted that is indicated in Figure 2 by the vector p_{observed}, which comprises the frequencies associated with frequency bands f₂, f₁₃, f₉, f₀ and their respective burst lengths.

The receiving transceiver 14 is enabled to correlate the pseudo-random sequence transmitted/received with the pseudo-random sequence known that may be stored in the storage medium 18 in order to determine a (relative) position of the pseudo-random sequence transmitted/received within the pseudo-random sequence known.

Accordingly, the receiving transceiver 14 is also enabled to predict the future radio frequency signal, namely the future signal bursts. This is indicated in Figure 2 by the vector predicted , which encompasses inter alia the frequency bands f₁₅, f₄ as next carrier frequencies used. Moreover, the respective burst lengths are also predicted appropriately.

Accordingly, a temporal synchronization between the transceivers 12, 14 can be performed since the receiving transceiver 14 is enabled to determine, particularly estimate, the relative position of the transmission with regard to the pseudo-random sequence known that follows a pre-defined order which assembles to be random.

The respective correlation and prediction may be done by means of an artificial intelligence module 20 of the respective transceiver 12, 14.

Accordingly, the artificial intelligence module 20 is configured to decode pseudo-random sequences in order to be enabled to correlate the recorded pseudo-random sequence with the pseudo-random sequence known.

For this purpose, the artificial intelligence module 20 may use classical algorithms in order to identify whether the spectrum recorded encompasses at least a portion of the radio frequency signal following the pseudo-random sequence known. This is inter alia possible in environments that are simple.

However, it is hard to identify a portion of radio frequency signal following the pseudo-random sequence known in a more complex environments as illustrated in Figure 3 in which the transmission of the transmitting transceiver 12 as well as several other transceivers are shown.

Generally, the artificial intelligence module 20 can be used to decode complex pseudo-random sequences or rather a complex scenario (environment), encompassing several different radio frequency signals or rather pseudo-random sequences received simultaneously, which may be transmitted from several different transmitting transceivers.

When comparing Figures 2 and 3, it already becomes obvious that it is more complex to identify the radio frequency signal transmitted by the transmitting transceiver 12 in the complex environment shown in Figure 3 than in the simple one shown in Figure 2.

However, the artificial intelligence module 20 may comprise a trained machine learning model, a neural network or deep-learning techniques

Accordingly, the artificial intelligence module 20 may use pattern recognition technologies in order to identify a part of the pseudo-random sequence known in the spectrum received or rather among all radio frequency signals received.

When the artificial intelligence module 20 has identified a certain part of the pseudo-random sequence known in the spectrum received or rather among all radio frequency signals received, the artificial intelligence module 20 is also enabled to determine or rather estimate the (relative) position of the pseudo-random sequence transmitted/received within the pseudo-random sequence known.

In Figures 2 and 3, the pseudo-random sequence transmitted is continuously received. However, the pseudo-random sequence may also be fragmented such that the pseudo-random sequence may have gaps of information.

This may occur when the respective transceiver 12, 14 in its receiving mode does not receive all messages sent, which encompass information concerning the pseudo-random sequence.

Nevertheless, the future of the pseudo-random sequence can be predicted completely or partly by analyzing the already recorded pseudo-random sequence.

Accordingly, the transceivers 12, 14 of the communication network 10 are enabled to identify the position of the pseudo-random sequence transmitted/received with respect to the pseudo-random sequence known such that a time relation can be derived from this information, which is used to passively synchronize the transceivers 12, 14 appropriately. In fact, no external absolute temporal reference is needed for the temporal synchronization, resulting in more available resources for communication.

## Claims

1. A communication network for time synchronous voice and data transmission, wherein the communication network (10) comprises at least two transceivers (12, 14) that are configured to transmit data packets in a transmission mode and to receive data packets in a receiving mode, wherein the at least two transceivers (12, 14) are further configured to generate an alternating radio frequency signal that follows a pseudo-random sequence which is known to each of the transceivers (12, 14), wherein at least one of the transceivers (12, 14), in its receiving mode, is configured to record a pseudo-random sequence transmitted, thereby obtaining a recorded pseudo-random sequence, and wherein the respective transceiver (12, 14) is configured to correlate the recorded pseudo-random sequence with the pseudo-random sequence known, thereby determining a position of the pseudo-random sequence transmitted within the pseudo-random sequence known.

2. The communication network according to claim 1, wherein the pseudo-random sequence transmitted corresponds to a part of the pseudo-random sequence known.

3. The communication network according to claim 1 or 2, wherein the pseudo-random sequence changes over time.

4. The communication network according to any of the preceding claims, wherein the transceivers (12, 14) are configured to synchronize themselves in a passive manner.

5. The communication network according to any of the preceding claims, wherein the communication network (10) is a self-synchronizing communication network.

6. The communication network according to any of the preceding claims, wherein the determination of the position of the pseudo-random sequence transmitted within the pseudo-random sequence known corresponds to an estimation of the position.

7. The communication network according to any of the preceding claims, wherein the communication network (10) comprises an artificial intelligence module (20) that is configured to decode pseudo-random sequences.

8. The communication network according to claim 7, wherein the artificial intelligence module (20) comprises a trained machine learning model, a neural network or deep-learning techniques.

9. The communication network according to any of the preceding claims, wherein the pseudo-random sequence known is received by at least one of the transceivers (12, 14) via an external key, particularly a cryptographic key.

10. The communication network according to any of the preceding claims, wherein the communication network (10) is a burst communication network.

11. The communication network according to any of the preceding claims, wherein the pseudo-random sequence is associated with frequency, length, power, modulation and/or coding.

12. The communication network according to any of the preceding claims, wherein the at least two transceivers (12, 14) are configured to generate an alternating carrier frequency of the radio frequency signal, wherein the carrier frequency follows the pseudo-random sequence.

13. A method of synchronizing a communication network (10) for time synchronous voice and data transmission, with the following steps:
- Providing a communication network (10) for time synchronous voice and data transmission, wherein the communication network (10) comprises at least two transceivers (12, 14) that transmit data packets in a transmission mode and receive data packets in a receiving mode, wherein the at least two transceivers (12, 14) generate an alternating radio frequency signal that follows a pseudo-random sequence which is known to each of the transceivers (12, 14),
- Recording a pseudo-random sequence transmitted by at least one of the transceivers (12, 14) in its receiving mode, thereby obtaining a recorded pseudo-random sequence, and
- Correlating the recorded pseudo-random sequence with the pseudo-random sequence known by the respective transceiver (12, 14), thereby determining a position of the pseudo-random sequence transmitted within the pseudo-random sequence known.

14. The method according to claim 13, wherein the pseudo-random sequence is decoded by an artificial intelligence module (20), in particular wherein the artificial intelligence module (20) comprises a trained machine learning model, a neural network or deep-learning techniques.

15. The method according to claim 13 or 14, wherein the pseudo-random sequence known is received by at least one of the transceivers (12, 14) via an external key, particularly a cryptographic key.
